(19) Europäisches Patentamt
European Patent Office
Office européen des brevets

(11) EP 2 491 063 B1

(12) **FASCICULE DE BREVET EUROPEEN**

(45) Date de publication et mention de la délivrance du brevet:
**07.08.2013 Bulletin 2013/32**

(21) Numéro de dépôt: **10765806.4**

(22) Date de dépôt: **19.10.2010**

(51) Int Cl.:
*C08F 214/18* (2006.01) *C08F 214/24* (2006.01)
*C08F 230/02* (2006.01) *C08F 8/40* (2006.01)
*C08F 8/20* (2006.01) *C08J 5/22* (2006.01)
*B01D 71/82* (2006.01) *B01D 71/32* (2006.01)
*H01M 8/10* (2006.01) *C08F 216/18* (2006.01)
*C08F 8/42* (2006.01) *C08F 8/12* (2006.01)

(86) Numéro de dépôt international:
**PCT/EP2010/065687**

(87) Numéro de publication internationale:
**WO 2011/048076 (28.04.2011 Gazette 2011/17)**

(54) **COPOLYMERES COMPRENANT DES GROUPES PHOSPHONATES ET/OU ACIDE PHOSPHONIQUE UTILISABLES POUR CONSTITUER DES MEMBRANES DE PILE A COMBUSTIBLE**

COPOLYMERE MIT PHOSPHONATEN UND/ODER PHOSPHONSÄUREGRUPPEN ZUR BILDUNG VON BRENNSTOFFZELLENMEMBRANEN

COPOLYMERS INCLUDING PHOSPHONATES AND/OR PHOSPHONIC ACID GROUPS USEFUL FOR FORMING FUEL CELL MEMBRANES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2009 FR 0957407**

(43) Date de publication de la demande:
**29.08.2012 Bulletin 2012/35**

(73) Titulaires:
- **Commissariat à l'Énergie Atomique et aux Énergies Alternatives 75015 Paris (FR)**
- **Centre National de la Recherche Scientifique 75016 Paris (FR)**

(72) Inventeurs:
- **TAYOUO, Russell 34090 Montpellier (FR)**
- **DAVID, Ghislain F-34080 Montpellier (FR)**
- **AMEDURI, Bruno F-34000 Montpellier (FR)**
- **ROUALDES, Stéphanie F-34090 Montpellier (FR)**
- **GALIANO, Hervé F-37700 La Ville Aux Dames (FR)**
- **BIGARRE, Janick 37000 Tours (FR)**

(74) Mandataire: **Ilgart, Jean-Christophe et al BREVALEX 95 rue d'Amsterdam 75378 Paris Cedex 8 (FR)**

(56) Documents cités:
- **VALADE D ET AL: "Synthesis and modification of alternating copolymers based on vinyl ethers, chlorotrifluoroethylene, and hexafluoropropylene", MACROMOLECULES 20091027 AMERICAN CHEMICAL SOCIETY USA LNKD- DOI:10.1021/MA900860U, vol. 42, no. 20, 30 septembre 2009 (2009-09-30), pages 7689-7700, XP002586167, DOI: 10.1021/ma900860u**
- **YAMABE M ET AL: "Novel phosphonated perfluorocarbon polymers", EUROPEAN POLYMER JOURNAL, PERGAMON PRESS LTD. OXFORD, GB LNKD- DOI:10.1016/S0014-3057(99) 00158-5, vol. 36, no. 5, 1 mai 2000 (2000-05-01), pages 1035-1041, XP004189905, ISSN: 0014-3057**
- **SCHMIDT-NAAKE G ET AL: "Synthesis of proton exchange membranes with pendent phosphonic acid groups by irradiation grafting of VBC", CHEMICAL ENGINEERING AND TECHNOLOGY JUNE 2005 WILEY-VCH VERLAG DE LNKD- DOI: 10.1002/CEAT.200407143, vol. 28, no. 6, juin 2005 (2005-06), pages 720-724, XP002587039,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 491 063 B1

**Description**

**DOMAINE TECHNIQUE**

La présente invention a trait à des copolymères fluorés originaux comprenant des groupes phosphonates et/ou acide phosphonique (éventuellement sous forme de sels) ainsi qu'à leur procédé de préparation.

Ces copolymères, présentant d'excellentes capacités physico-chimiques, en particulier, en termes de capacités d'échange ionique, de stabilité thermique et de stabilité chimique, peuvent trouver leur application dans la préparation de membranes échangeuses d'ions, destinées aux piles à combustible, en particulier de piles à combustible PEMFC (signifiant « Proton Exchange Membrane Fuel Cell » pour « Pile à combustible à membrane échangeuse de protons ») et DMFC (signifiant « Direct Methanol Fuel Cell » pour « Pile à combustible directe au méthanol »).

**ÉTAT DE LA TECHNIQUE ANTÉRIEURE**

Une pile à combustible comporte, classiquement, un empilement de cellules élémentaires, au sein desquelles a lieu une réaction électrochimique entre deux réactifs qui sont introduits de manière continue. Le combustible, tel que l'hydrogène, pour les piles fonctionnant avec des mélanges hydrogène/oxygène (PEMFC) ou le méthanol pour des piles fonctionnant avec des mélanges méthanol/oxygène (DMFC), est amené au contact de l'anode, alors que le comburant, généralement l'oxygène, est amené au contact de la cathode. L'anode et la cathode sont séparées par un électrolyte, de type membrane échangeuse d'ions. La réaction électrochimique, dont l'énergie est convertie en énergie électrique, se scinde en deux demi-réactions :

- une oxydation du combustible, se déroulant à l'interface anode/électrolyte produisant, dans le cas des piles à hydrogène des protons $H^+$, qui vont traverser l'électrolyte en direction de la cathode, et des électrons, qui rejoignent le circuit extérieur, afin de concourir à la production d'énergie électrique ;
- une réduction du comburant, se déroulant à l'interface électrolyte/cathode, avec production d'eau, dans le cas des piles à hydrogène.

La réaction électrochimique a lieu au niveau d'un assemblage électrode-membrane-électrode.

L'assemblage électrode-membrane-électrode est un assemblage très mince d'une épaisseur de l'ordre du millimètre et chaque électrode est alimentée par les gaz combustible et comburant par exemple à l'aide d'une plaque cannelée, dite plaque bipolaire.

La membrane conductrice ionique est généralement une membrane organique comprenant des groupes ioniques qui, en présence d'eau, permettent la conduction des protons produits à l'anode par oxydation de l'hydrogène.

Plus précisément, en milieu aqueux, les groupes acides portés par les membranes se dissocient totalement et libèrent des protons libres, qui s'entourent d'une ou plusieurs molécules d'eau, assurant ainsi un transport de protons selon un mécanisme véhiculaire assuré par l'eau d'hydratation. La mobilité des protons dans la membrane est donc étroitement liée à la teneur en eau (soit, en d'autres termes, à la capacité de gonflement de la membrane) et la conductivité de la membrane (liée au nombre de sites acides de celle-ci).

Outre la capacité à assurer la conduction protonique, les membranes doivent également répondre aux spécificités suivantes :

- une faible perméabilité aux gaz (notamment au gaz $H_2$ pour les piles PEMFC et à la vapeur de méthanol pour les piles DMFC), afin d'assurer une bonne étanchéité entre les compartiments anodique et cathodique de la pile ainsi qu'un rendement électrique et catalytique maximal ;
- une prise d'eau suffisante pour favoriser un bon taux de gonflement, afin d'assurer un bon transport protonique à partir d'une dissociation des protons acides, formant ainsi une phase ionique hydratée dans la totalité du volume de la membrane ;
- une bonne stabilité électrochimique et mécanique, notamment une innocuité réactionnelle vis-à-vis des gaz réactifs (tels que l'hydrogène ou les vapeurs de méthanol) et une résistance aux pressions de gaz auxquelles est soumise la pile.

Pour tenter de surmonter de telles exigences, les premiers polymères à avoir été élaborés sont des polymères présentant des groupes protogènes du type acide sulfonique, plus particulièrement des polymères perfluorés sulfoniques tels que le Nafion ®. Ces polymères présentent un bon transfert protonique grâce à une forte acidité liée aux groupes acide sulfonique et à un nombre d'hydratation $\lambda$ important ($\lambda$>15, étant défini comme le nombre de molécules d'eau par groupement protogène). Toutefois, les membranes élaborées à partir de ces polymères ne présentent d'efficacité réelle que pour de forts taux d'hydratation et se trouvent ainsi limitées à des utilisations à faible température (à savoir, des

températures inférieures à 90°C) et haute humidité relative (par exemple, supérieure à 80%).

D'autres alternatives que le Nafion ® ont été proposées pour la constitution de membranes pour pile à combustible.

Ainsi, certains auteurs ont proposé des membranes à base de polymères comprenant des groupes hétérocycliques azotés, ces groupes permettant une conduction protonique dite par « saut de protons » entre les groupes hétérocycliques (tel que décrit dans J. Membr. Sci. 2001, 185, 29-39).

Pour fonctionner, ces membranes ne nécessitent pas absolument la présence d'une solution aqueuse. Il est à noter également que la dissociation protonique des groupes hétérocycliques susmentionnés est très faible (ces groupes présentant un pKa supérieur à celui de l'eau), ce qui nécessite, pour obtenir une conductivité efficace, d'adjoindre, dans la membrane en sus des polymères, un ou plusieurs dopants constituant une source supplémentaire d'apport de protons.

D'autres auteurs ont proposé des membranes à base de polymères comprenant des groupes protogènes de type acide phosphonique avec toutefois les inconvénients inhérents à ces groupes, à savoir :

- une acidité des groupes acide phosphonique plus faible que celle des groupes acide sulfonique, ce qui requiert un taux de présence de ces groupes dans les polymères plus élevé que celui des groupes acide sulfonique pour obtenir une conduction équivalente ;
- des difficultés de synthèse de ce type de polymère.

Ces polymères porteurs de groupes acide phosphonique peuvent être obtenus par deux voies de synthèse :

- soit par polymérisation de monomères porteurs de groupements phosphonates suivie d'une hydrolyse des groupements phosphonates en groupes acide phosphonique ;
- soit par introduction de groupements phosphonates dans des polymères existants suivie d'une hydrolyse des groupements phosphonates en groupes acide phosphonique.

Concernant la première voie, elle est peu usitée, car il n'existe pas sur le marché de monomères appropriés comprenant des groupements phosphonates. Pour la mettre en oeuvre, il est ainsi nécessaire de fabriquer lesdits monomères souvent au prix de plusieurs étapes de synthèse non triviales, qui peuvent être coûteuses à mettre en oeuvre en raison du coût élevé des réactifs.

Concernant la deuxième voie, des copolymères ont été conçus en partant de copolymères de base comprenant des groupes aromatiques. Ainsi, Laffite et Jannasch (J.Polym.Sci., Part A :Poly.Chem. 2007, 45, 269-283) ont conçu des copolymères porteurs de groupes phosphoniques en partant d'un copolymère de base comprenant des groupes aromatiques porteurs de groupes sulfones, et en lui faisant subir une étape de lithiation et une étape de phosphonation par cross-coupling, les groupes sulfones étant ainsi remplacés par des groupes phosphonates suivie d'une hydrolyse pour les transformer en groupes phosphoniques. La synthèse de ces copolymères nécessite toutefois des conditions de sécurité importantes du fait de l'utilisation du butyllithium. Qui plus est, les copolymères résultants présentent une température de transition vitreuse élevée, ce qui génère une mise en forme difficile sous forme de membranes. Enfin, ces copolymères présentent une conductivité protonique d'environ 5 mS/cm à 100°C pour des humidités relatives inférieures à 30% et avec une capacité d'échange ionique allant de 0,6 à 1,8 méq/g.

Les inventeurs se sont proposé de mettre au point de nouveaux copolymères qui puissent être utilisés pour constituer des membranes de pile à combustible, qui répondent aux cahiers de charges suivants :

- une conductivité protonique modulable, pouvant être élevée pour des températures allant de la température ambiante jusqu'à 150°C et pour des humidités relatives inférieures à 50% ;
- une stabilité thermique à des températures élevées, par exemple, allant jusqu'à 150°C ;
- une facilité à être mise en forme en membrane, liée notamment à l'aptitude de ces copolymères à être solubilisés dans des solvants organiques, tels que le diméthylsulfoxyde ;
- une facilité de synthèse de ces copolymères.

## EXPOSÉ DE L'INVENTION

Des copolymères répondant aux spécificités mentionnées ci-dessus sont des copolymères comprenant au moins un motif répétitif de formule (I) suivante :

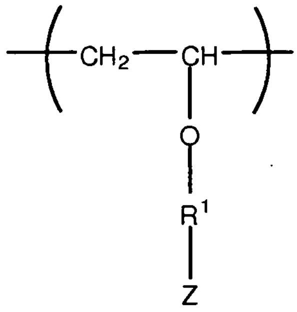

(I)

et au moins un motif répétitif de formule (II) suivante :

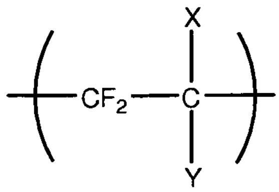

(II)

dans lesquelles :

- $R^1$ est un groupe alkylène ;
- Z est un groupe $-PO_3R_3R_4$, $R_3$ et $R_4$ représentant, indépendamment l'un de l'autre, un atome d'hydrogène, un groupe alkyle ou un cation;
- X et Y représentent, indépendamment l'un de l'autre, un atome d'halogène ou un groupe perfluorocarboné.

Avant d'entrer plus en détail dans la description, nous proposons les définitions suivantes.

Par groupe perfluorocarboné, on entend, classiquement, dans ce qui précède et ce qui suit, un groupe comprenant exclusivement des atomes de carbone et des atomes de fluor. Par exemple, il peut s'agir d'un groupe perfluoroalkyle, comprenant de 1 à 6 atomes de carbone, tel qu'un groupe perfluorométhyle $-CF_3$.

Par groupe alkylène, on entend un groupe alkyle formant pont entre deux autres groupes comprenant, par exemple, de 1 à 10 atomes de carbone, tel qu'un groupe éthylène $-CH_2-CH_2-$.

Selon l'invention, $R^1$ peut être un groupe $-CH_2-CH_2-$.

Selon l'invention, X et Y peuvent représenter chacun un atome d'halogène, tel que le fluor et le chlore, l'un au moins des groupes X ou Y étant, de préférence, un atome de fluor ou X peut représenter un groupe perfluoroalkyle, tel que $-CF_3$ tandis que Y représente un atome d'halogène, tel que F.

Les copolymères de l'invention peuvent comprendre de 40 à 80% molaire de motif répétitif de formule (I) et de 20 à 60% molaire de motif répétitif de formule (II).

La masse molaire en nombre des copolymères de l'invention peut aller de 20 000 à 30 000 $g.mol^{-1}$.

Outre les motifs répétitifs de formule (I) et (II) susmentionnés, les copolymères peuvent comprendre au moins un motif répétitif de formule (III) suivante :

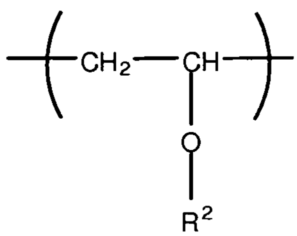

(III)

dans laquelle $R^2$ est un groupe alkyle pouvant comprendre de 1 à 10 atomes de carbone, tel qu'un groupe éthyle $-CH_2-CH_3$.

Dans ce cas, les copolymères peuvent comprendre de 10 à 40% molaire de motif répétitif de formule (I), de 40 à 80% molaire de motif répétitif de formule (II) et de 0 à 30% molaire de motif répétitif de formule (III).

D'un point de vue structural, les copolymères de l'invention peuvent être des copolymères aléatoires (ce qui signifie que les motifs répétitifs susmentionnés sont répartis de façon aléatoire dans le squelette du copolymère), des copolymères alternés (ce qui signifie qu'il y a alternance entre un motif répétitif de formule (I) et un motif répétitif de formule (II) et éventuellement un motif répétitif de formule (III).

Parmi les copolymères conformes à la présente invention, on peut citer les copolymères particuliers suivantes :

- des copolymères comprenant comme motif répétitif conforme à la formule (I) un motif répétitif de formule (Ia) suivante :

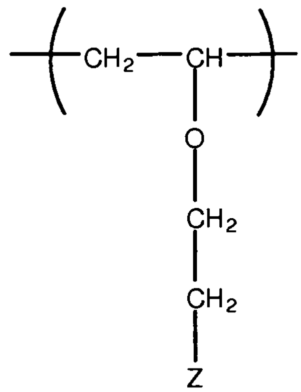

(Ia)

Z étant un groupe de formule - $PO_3R_3R_4$, avec $R_3$ et $R_4$ représentant un groupe éthyle $-CH_2-CH_3$ ou un atome d'hydrogène,
et comme motif conforme à la formule (II) un motif répétitif de formule (IIa) suivante :

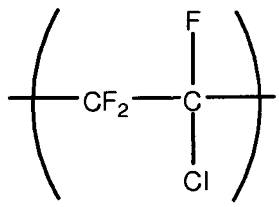

(IIa)

- des copolymères comprenant comme motif répétitif conforme à la formule (I) un motif répétitif de formule (Ia) suivante :

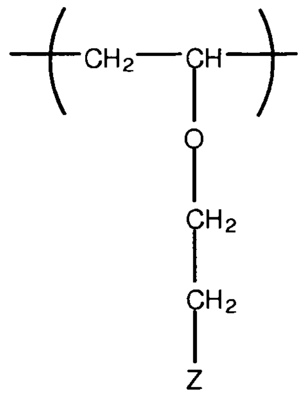

(Ia)

Z étant un groupe de formule $-PO_3R_3R_4$, avec $R_3$ et $R_4$ représentant un groupe éthyle $-CH_2-CH_3$ ou un atome d'hydrogène,

et comme motif conforme à la formule (II) un motif répétitif de formule (IIa) suivante :

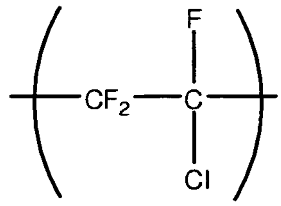

(IIa)

et comme motif conforme à la formule (III) un motif répétitif de formule (IIIa) suivante :

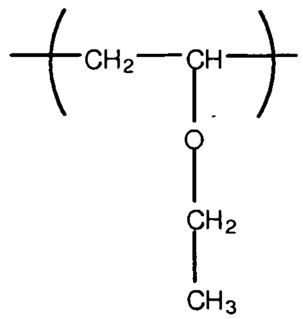

(IIIa)

Les copolymères de l'invention peuvent être préparés par un procédé de mise en oeuvre simple comprenant :

- une étape de réaction d'un copolymère de base comprenant au moins un motif répétitif de formule (IV) suivante :

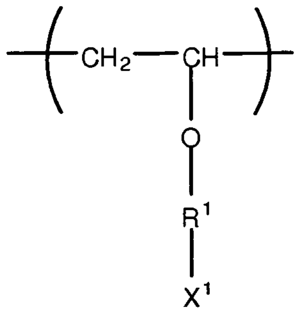

(IV)

et au moins un motif répétitif de formule (II) suivante :

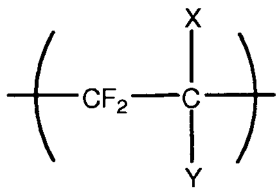

(II)

dans lesquelles $R^1$, X et Y sont tels que définis ci-dessus et $X^1$ est un atome d'iode,
et éventuellement un motif répétitif de formule (III) suivante :

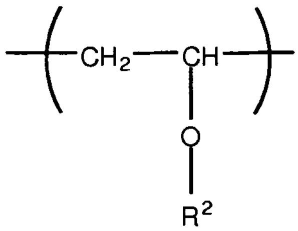

(III)

dans laquelle $R^2$ est tel que défini ci-dessus,
avec un réactif trialkylphosphite, moyennant quoi tout ou partie des groupes $X^1$ sont substitués par un groupe de formule $-PO_3R_5R_6$, $R_5$ et $R_6$ représentant un groupe alkyle issu du réactif trialkylphosphite ;

- éventuellement, une étape d'hydrolyse du groupe $-PO_3R_5R_6$, moyennant quoi ledit groupe est transformé en groupe $-PO_3R_3R_4$, avec $R_3$ et $R_4$ représentant un atome d'hydrogène ou un cation.

Le réactif trialkylphosphite peut répondre à la formule $P(OR_5)(OR_6)(OR_7)$, $R_5$, $R_6$ et $R_7$ représentant un groupe alkyle, tel qu'un groupe éthyle.

Lorsque l'on veut obtenir des copolymères pour lesquels $R_3$ et $R_4$ sont des groupes alkyles, il n'y a pas d'étape d'hydrolyse nécessaire telle que susmentionnée, vu que les groupes alkyles constitutifs de $R_3$ et $R_4$ ne sont ni plus ni moins que les groupes $R_5$ et $R_6$ issus du réactif trialkylphosphite.

L'étape de substitution d'un atome d'iode par un groupe phosphonate est connue sous le nom de réaction d'Arbuzov, qui consiste en une réaction de substitution nucléophile du type $SN_2$ selon le schéma réactionnel suivant :

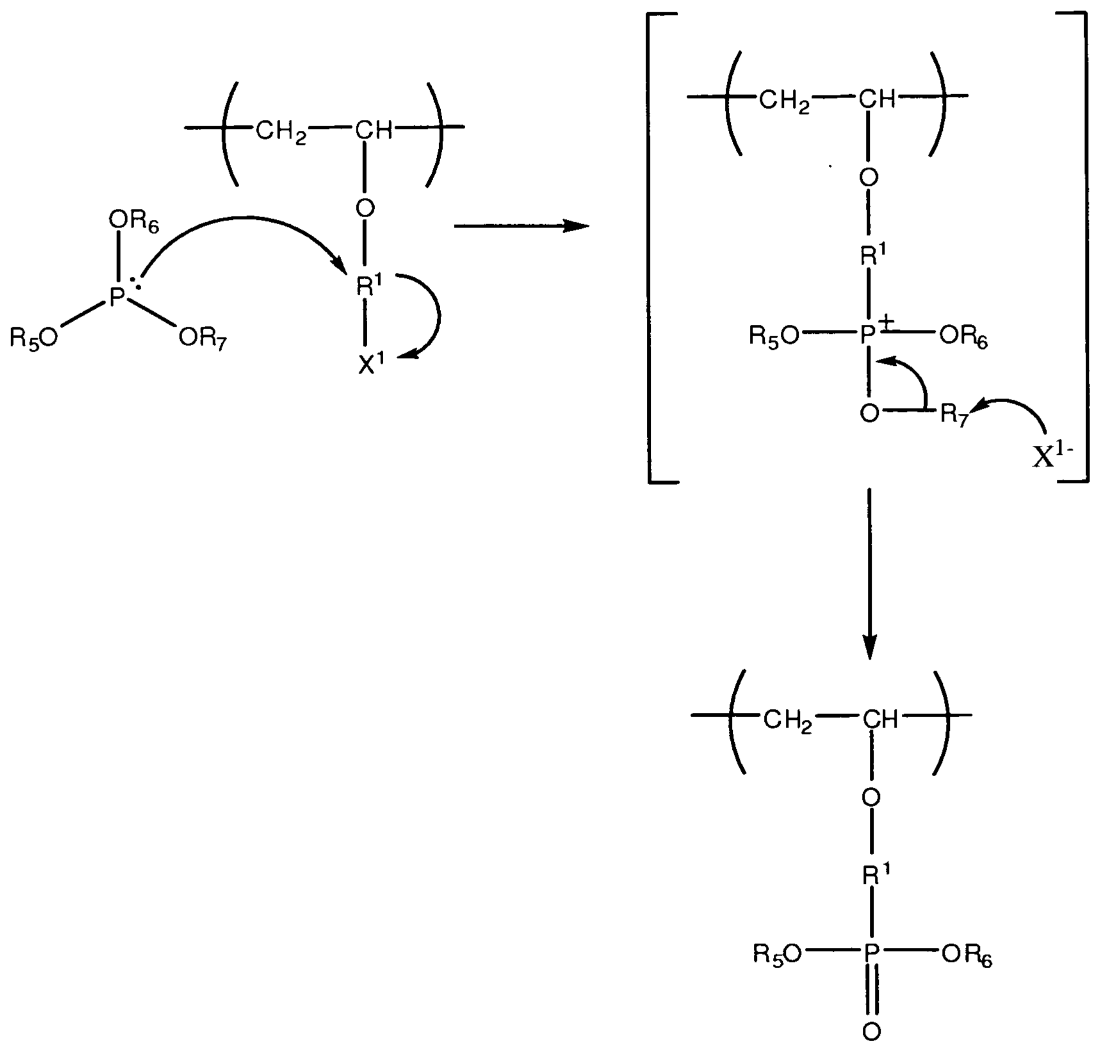

Cette réaction est réalisée en chauffant le milieu réactionnel, par exemple, à une température allant de 80 à 130°C, tel que 120°C.

Le copolymère résultant peut ensuite subir une étape d'isolement par précipitation, par exemple, avec de l'eau distillée puis être soumis à une étape de séchage.

Le copolymère résultant de la réaction d'Arbuzov et après un éventuel isolement et un éventuel séchage peut être soumis à une étape d'hydrolyse de nature à transformer le groupe phosphonate $-PO_3R_5R_6$ en groupe acide phosphonique ou un sel de celui-ci, cette étape d'hydrolyse étant assurée à température ambiante par mise en contact du copolymère, en premier lieu, avec un agent de silylation, tel que le bromotriméthylsilane, suivi, en second lieu, par une mise en contact du copolymère silylé avec un milieu alcoolique, tel que du méthanol, moyennant quoi on obtient des groupes acide phosphonique, éventuellement sous forme de sel.

Le copolymère de base susmentionné peut résulter d'une réaction d'iodation d'un copolymère comprenant au moins un motif répétitif de formule (V) :

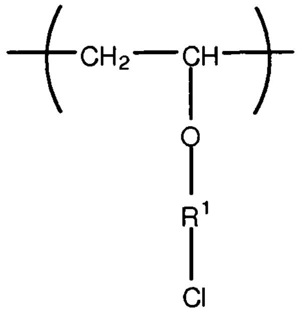

(V)

et au moins un motif répétitif de formule (II) suivante :

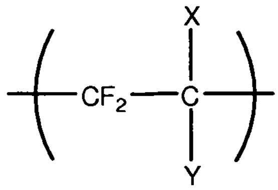

(II)

dans lesquelles $R^1$, X et Y sont tels que définis ci-dessus et éventuellement au moins un motif répétitif de formule (III) :

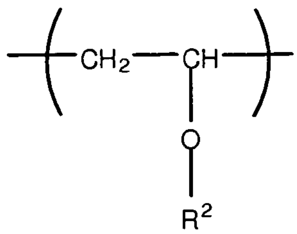

(III)

dans laquelle $R^2$ est tel que défini ci-dessus,
avec un réactif d'iodation, tel qu'un sel d'iode comme l'iodure de sodium.

Le copolymère comprenant au moins un motif répétitif de formule (V) et au moins un motif répétitif de formule (II) et éventuellement au moins un motif répétitif de formule (III) peuvent être réalisés par un procédé de copolymérisation, en particulier, un procédé de copolymérisation radicalaire comprenant une étape de polymérisation en présence d'un amorceur de radicaux libres d'au moins un monomère de formule (VI) suivante :

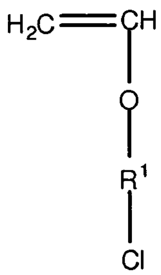

(VI)

d'au moins un monomère de formule (VII) suivante :

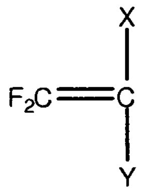

(VII)

et éventuellement d'au moins un monomère de formule (VIII) suivante :

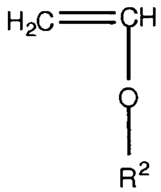

(VIII)

$R^1$, X, Y et $R^2$ étant tels que définis ci-dessus.

Un amorceur de radicaux libres efficace dans le cadre de ce procédé peut être choisi parmi les dérivés perpivalates, tels que le perpivalate de tertiobutyle.

L'étape de polymérisation s'effectue, avantageusement, dans un solvant polaire aprotique, lequel peut être choisi parmi les solvants suivants :

- le diméthylformamide (DMF) ;
- l'acétonitrile ;
- un solvant halogéné, tel que le 1,1,2-trifluoro-1,2,2-trichloroéthane, le 1,1,1,3,3-pentafluorobutane ;
- le tétrahydrofurane ;
- l'eau, et
- les mélanges de ceux-ci.

Dans le cas où les monomères utilisés existent sous forme gazeuse (ce qui est le cas notamment du monomère chlorotrifluoroéthylène) et que la réaction se déroule sous pression, celle-ci peut être mise en oeuvre dans un autoclave.

Le procédé de l'invention est particulièrement avantageux, car il permet de contrôler le taux de substitution du copolymère de base par les groupes phosphonates et/ou acide phosphonique (éventuellement sous forme de sels) en jouant sur la quantité de motifs de formule (IV) présent dans le copolymère de base. De plus, ce procédé est facile à mettre en oeuvre.

Les copolymères selon l'invention, comme mentionnés précédemment, ont pour particularité de présenter une bonne stabilité chimique et mécanique notamment à des températures supérieures à 100°C, voire allant jusqu'à 250°C et ce quelque soit le taux de groupements phosphoniques.

De ce fait, la présente invention a également pour objet une membrane comprenant au moins un copolymère tel que décrit ci-dessus.

Les membranes peuvent être préparées de manière classique, par exemple, par coulée, c'est-à-dire que le copolymère est mis en solution dans un solvant adéquat, tel que de l'acétone, puis appliqué sur une surface plane, par exemple une plaque de verre, à l'aide d'un dispositif, tel qu'un applicateur à main.

Le copolymère formant un film humide est ensuite séché pour former un film d'épaisseur adéquate, par exemple de 15 à 150 $\mu$m, puis décollé du substrat.

De telles membranes comprenant des groupes acide phosphonique peuvent présenter une capacité d'échange ionique très élevée, pouvant aller jusqu'à 6 méq.$g^{-1}$. De ce fait, ces membranes peuvent être utilisées notamment pour isoler les compartiments anodiques et cathodiques d'une pile à combustible pouvant fonctionner avec les systèmes suivants :

- hydrogène, alcools, tel que méthanol à l'anode ;
- oxygène, air à la cathode.

Ainsi, la présente invention a également pour objet un dispositif de pile à combustible comprenant au moins

une cellule électrochimique comprenant une membrane telle que définie ci-dessus, laquelle membrane est disposée entre deux électrodes.

Pour préparer un tel dispositif, la membrane est placée entre deux électrodes, par exemple, en tissu de carbone, éventuellement platiné, et imprégnées par exemple par un copolymère conforme à l'invention. L'ensemble est ensuite pressé par chauffage.

Cet ensemble est ensuite inséré entre deux plaques (par exemple, en graphite, appelées plaques bipolaires, qui assurent la distribution des gaz et la conductivité électrique).

L'invention va maintenant être décrite, en référence aux exemples suivants, donnés à titre indicatif et non limitatif.

## BRÈVE DESCRIPTION DES DESSINS

La figure unique représente un graphique illustrant la perte de masse P (en %) des copolymères préparés à l'exemple 1, l'exemple 2 et l'exemple 3 (respectivement, courbes a, b et c) en fonction de la température appliquée T (en °C).

## EXPOSÉ DÉTAILLÉ DE MODES DE RÉALISATION PARTICULIERS

### <u>EXEMPLE 1</u>

Cet exemple comprend trois étapes :

- une étape de synthèse d'un copolymère par copolymérisation de chlorotrifluoroéthylène et du 2-chloroéthylvinyléther ;
- une étape de iodation du copolymère obtenu ;
- une étape de réaction d'Arbuzov du copolymère iodé ;
- une étape d'hydrolyse des groupes phophonates du copolymère.

<u>a) Etape de synthèse d'un copolymère par copolymérisation de chlorotrifluoroéthylène et du 2-chloroéthylvinyléther</u>

Les monomères utilisés dans le cadre de cette étape sont respectivement :

*le chlorotrifluoroéthylène de formule suivante :

$$CF_2=CFCl$$

intitulé, par la suite, CTFE ;

*le 2-chloroéthylvinyléther de formule suivante :

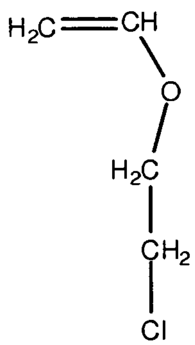

intitulé, par la suite, CEVE.

Le CTFE se présente sous forme gazeuse, ce qui nécessite l'utilisation d'un autoclave pour mettre en oeuvre cette étape.

L'autoclave est muni d'un agitateur mécanique, de deux vannes (une vanne d'entrée et une vanne de sortie de gaz), d'un disque de sécurité et d'un manomètre de précision.

Dans un premier temps, on introduit dans l'autoclave du $K_2CO_3$ sous forme de poudre à raison de 3% molaire par rapport au CEVE suivi d'une mise sous pression de l'autoclave avec 25 bars d'azote pendant environ 60 minutes.

Une fois l'azote évacué, le réacteur est placé sous vide pendant environ 30 minutes, puis il est introduit le CEVE (20 g), du perpivalate de tertiobutyle (1,03 g) (à raison de 1% molaire par rapport au CEVE), le 1,1,1,3,3-pentafluorobutane (150 mL) et le CTFE (24 g).

L'autoclave est ensuite placé sous agitation et chauffé progressivement jusqu'à 75°C pendant environ 15 heures. Le produit de cette réaction est dissous dans du diéthyléther puis précipité dans le méthanol et placé sous vide à 50°C en vue d'un séchage. Le rendement de la réaction est de 75%.

La structure du copolymère est contrôlée par Infra-Rouge, RMN ($^1H$ et $^{19}F$), chromatographie en phase gazeuse (intitulée, par la suite, GPC), calorimétrie à balayage différentiel (intitulée, par la suite, DSC), analyse thermogravimétrique (intitulée, par la suite, ATG) et par analyse élémentaire.

b) Iodation du copolymère obtenu à l'étape a)

Le copolymère obtenu à l'étape a) est solubilisé dans l'acétone contenu dans un ballon de 1000 mL muni d'un agitateur magnétique. Ensuite, 3 équivalents d'iodure de sodium sont introduits dans le ballon que l'on place dans un bain d'huile, sur un agitateur chauffant et muni d'un réfrigérant. Le mélange réactionnel du ballon est porté à reflux pendant 7 jours. Le copolymère iodé est ensuite filtré et le filtrat est précipité dans le méthanol et placé dans une étuve sous vide à 50°C. Le rendement global de la réaction est de 68%. La structure du copolymère iodé est contrôlée par Infra-Rouge, RMN ($^1H$ et $^{19}F$), GPC, DSC, ATG et par analyse élémentaire.

c) Réaction d'Arbuzov sur le copolymère iodé

Dans un monocol de 250 mL muni d'un agitateur magnétique, on introduit successivement 20 g de copolymère iodé et 100 mL de triéthylphosphite que l'on plonge ensuite dans un bain d'huile sur un agitateur chauffant. Le bain est chauffé à 120°C pendant 24 heures. On précipite le copolymère phosphoné dans 2000 mL d'eau distillée. Le produit obtenu après filtration est placé dans une étuve sous vide à 90°C. Le rendement global de la réaction est de 60%. La structure du copolymère obtenu contrôlée par Infra-Rouge, RMN ($^1H$ et $^{19}F$), GPC, DSC, ATG et par analyse élémentaire.

d) Hydrolyse des groupes phosphonates portés par le copolymère obtenu à l'étape c)

Dans un ballon bicol de 250 mL, équipé d'un réfrigérant et d'un agitateur magnétique, on introduit sous atmosphère inerte 1 équivalent molaire du copolymère obtenu à l'étape c) (15 g) porteur de groupes phosphonates dans du dichlorométhane anhydre. Après une distillation azéotropique pendant 30 minutes à reflux, on introduit goutte à goutte et à l'aide d'une seringue 2,2 équivalents molaires de bromotriméthylsilane (12 mL). Le mélange réactionnel est laissé sous agitation à 40°C pendant 24 heures sous atmosphère inerte. En fin de silylation, le solvant est évaporé sous vide. Ensuite, le produit est mis en présence de 30 mL de méthanol et laissé sous agitation pendant 4 heures. Après élimination du méthanol sous vide, on recueille le copolymère porteur de groupe acide phosphonique par précipitation dans l'eau distillée suivi d'un séchage à l'étuve (90°C/27 mbars). le rendement global de la réaction est de 52%. La structure du copolymère fonctionnalisé acide phosphonique est contrôlée en Infra-Rouge, RMN ($^1H$ et $^{19}F$), GPC, DSC, ATG et par analyse élémentaire. Le copolymère obtenu présente une excellente solubilité dans le diméthylsulfoxyde. La solubilité du copolymère est une des propriétés fondamentales recherchées, car' elle permet au copolymère d'être mis en oeuvre sous forme de membranes.

EXEMPLE 2

Le mode opératoire pour obtenir les copolymères de cet exemple reste similaire à celui suivi dans l'exemple 1, si ce n'est que l'on ajoute un troisième monomère : l'éthylvinyl éther de formule suivante :

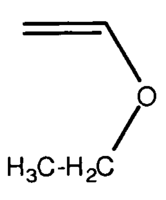

intitulé, par la suite, EVE.

Pour obtenir un taux de substitution de 57%, on utilise les proportions molaires (CTFE)/(CEVE)/(EVE) : 50/30/20.

La structure du copolymère comprenant des groupes acide phosphonique est contrôlée en Infra-Rouge, RMN ($^1H$ et $^{19}F$), GPC, DSC, ATG et par analyse élémentaire. Le copolymère obtenu présente une excellente solubilité dans

le diméthylsulfoxyde. La solubilité du copolymère est une des propriétés fondamentales recherchées, car elle permet au copolymère d'être mis en oeuvre sous forme de membranes.

EXEMPLE 3

Le mode opératoire pour obtenir les copolymères de cet exemple reste similaire à celui suivi dans l'exemple 1, si ce n'est que l'on ajoute un troisième monomère : l'éthylvinyl éther de formule suivante :

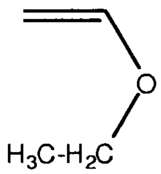

intitulé, par la suite, EVE.

Pour obtenir un taux de substitution de 35%, on utilise les proportions molaires (CTFE)/(CEVE)/(EVE) : 50/20/30.

La structure du copolymère comprenant des groupes acide phosphonique est contrôlée en Infra-Rouge, RMN ($^1$H et $^{19}$F), GPC, DSC, ATG et par analyse élémentaire. Le copolymère obtenu présente une excellente solubilité dans le diméthylsulfoxyde. La solubilité du copolymère est une des propriétés fondamentales recherchées, car elle permet au copolymère d'être mis en oeuvre sous forme de membranes.

EXEMPLE 4

Cet exemple illustre la stabilité thermique des copolymères présentés selon l'exemple 1 à 3 ci-dessus.

La stabilité thermique a été évaluée à l'aide d'analyses thermogravimétriques avec un appareil TGA 51 de TA Instruments. Les échantillons de masses comprises entre 2 et 10 mg (plus précisément, 5 mg) sont chauffés de 20 à 600°C (à raison d'une montée en température de 5°C/min) sous air et avec un isotherme préalable à 100°C pendant 30 minutes.

Les résultats de ces analyses sont reportés sur la figure unique représentant la perte en masse (en %) par rapport à la température (en °C).

Pour les trois copolymères préparés selon les exemples 1-3 (dont le comportement est illustré respectivement par les courbes a), b) et c) de la figure 1), on observe une stabilité thermique jusqu'à 250°C. Au-delà de cette température, les copolymères commencent à se décomposer.

Il ressort de ces résultats, que les copolymères de l'invention peuvent être utilisés à des températures élevées, notamment dans des piles à combustible dont la température d'utilisation peut aller jusqu'à 150°C.

EXEMPLE 5

Cet exemple illustre la mise en forme des copolymères préparés selon les exemples 1 à 3 en membranes.

Pour ce faire, dans un premier temps, il est procédé à une mise en dispersion du copolymère dans un solvant organique : le diméthylsulfoxyde (DMSO), le solvant représentant 73% en masse par rapport à la masse du copolymère. Plus précisément, le copolymère est introduit dans le solvant puis l'ensemble est agité pendant au moins deux heures jusqu'à une complète dissolution du copolymère. La solution obtenue est ensuite soumise à un bain ultrasonique pendant plusieurs minutes.

Dans un deuxième temps, le mélange visqueux obtenu est déposé sur une plaque de téflon au moyen d'un applicateur à main (« Hand-coater ») placé sous une hotte à flux laminaire. Ensuite, une évaporation lente du solvant est assurée en plaçant la plaque de téflon dans une étuve, dont la température est fixée à 60°C pendant 1 heure, puis 70°C pendant 1 heure et enfin 90°C pendant 12 heures.

Les membranes obtenues à partir des copolymères de l'exemple 1, de l'exemple 2 et de l'exemple 3 présentent respectivement une épaisseur de 60, 150 et 100 $\mu$m et une capacité d'échange ionique expérimentale de 5,76, 2,09 et 0,75 méq/g.

Cette capacité d'échange ionique expérimentale (intitulée $CEI_{exp}$ par la suite) est déterminée par dosage en retour des groupes acide phosphonique dans le copolymère en suivant le protocole ci-dessous :

*Essuyage des faces de l'échantillon de membrane avec du papier filtre ;
*Immersion deux fois dans une solution de HCl 1M (à raison de 50 mL à chaque fois pour une membrane de 2 cm$^2$) ;
*Rinçages successifs à l'eau distillée (3 fois) ;

*Immersion dans une solution contenant 5 mL de NaOH 0,1 N et 50 mL de NaCl 0,1 N (cette solution constituant la solution d'échange), afin de favoriser l'échange entre $H^+$ et $Na^+$ sous faible agitation pendant 4 heures ;
*Dosage des anions $OH^-$ de la solution d'échange avec une solution HCl $10^{-2}$ M (dite solution titrante).

Le volume de la solution d'échange doit être mesuré avec précision. La CEI expérimentale (en méq.$g^{-1}$) est ensuite calculée par l'équation suivante :

$$CEI_{exp} = [OH^-]*V/m_s$$

dans laquelle :

$[OH^-]$= Concentration de la solution d'échange en $OH^-$ (mol/L) ;
V= Volume de la solution d'échange (en mL) ;
$m_s$= masse sèche de l'échantillon (en g) déterminée par pesée au dessicateur halogène HR53 (de Mettler Toledo).

EXEMPLE 6

Cet exemple illustre les résultats électrochimiques obtenus à partir des membranes préparées selon l'exemple 5, en particulier, en termes de conductivité protonique.

Les mesures de conductivité protonique sont déterminées par spectroscopie d'impédance complexe en utilisant un banc d'acquisition, formé d'un analyseur de fréquence (Solartron SI 1255) couplé à une cellule de mesure munie de deux électrodes de platine de surface active de 0,785 $cm^2$. Les mesures sont réalisées dans une enceinte climatique, afin de fixer le taux d'humidité et la température lors des essais.

Les mesures de conductivité protonique à température ambiante (avec une humidité relative proche de 100%) conduisent à des valeurs d'environ 20 mS/cm.

## Revendications

**1.** Copolymère comprenant au moins un motif répétitif de formule (I) suivante :

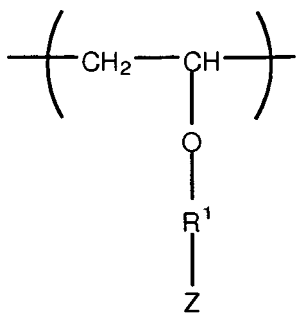

(I)

et au moins un motif répétitif de formule (II) suivante :

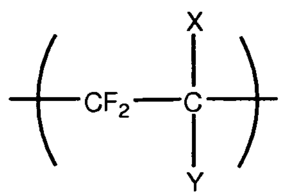

(II)

dans lesquelles :

- $R^1$ est un groupe alkylène ;
- Z est un groupe $-PO_3R_3R_4$, $R_3$ et $R_4$ représentant, indépendamment l'un de l'autre, un atome d'hydrogène, un groupe alkyle ou un cation;
- X et Y représentent, indépendamment l'un de l'autre, un atome d'halogène ou un groupe perfluorocarboné.

**2.** Copolymère selon la revendication 1, dans lequel $R^1$ est un groupe de formule $-CH_2-CH_2-$.

**3.** Copolymère selon la revendication 1 ou 2, dans lequel X et Y représentent chacun un atome d'halogène, l'un au moins des groupes X ou Y étant un atome de fluor.

**4.** Copolymère selon la revendication 1 ou 2, dans lequel X représente un groupe perfluoroalkyle, tandis que Y représente un atome d'halogène.

**5.** Copolymère selon l'une quelconque des revendications précédentes, comprenant, en outre, au moins un motif répétitif de formule (III) suivante :

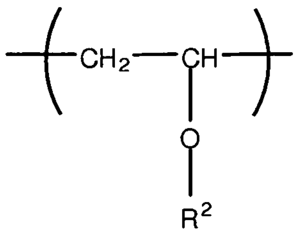

(III)

dans laquelle $R^2$ est un groupe alkyle.

**6.** Copolymère selon l'une quelconque des revendications 1 à 3 et 5, choisi parmi les copolymères suivants :

- des copolymères comprenant comme motif répétitif conforme à la formule (I) un motif répétitif de formule (Ia) suivante :

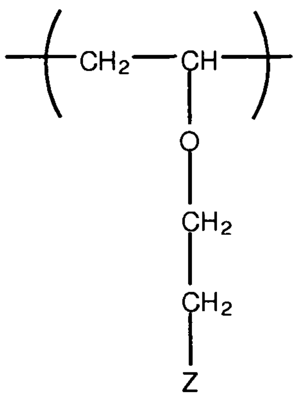

(Ia)

Z étant un groupe de formule $-PO_3R_3R_4$, avec $R_3$ et $R_4$ représentant un groupe éthyle $-CH_2-CH_3$ ou un atome d'hydrogène,
et comme motif conforme à la formule (II) un motif répétitif de formule (IIa) suivante :

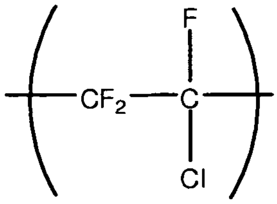

(IIa)

- des copolymères comprenant comme motif répétitif conforme à la formule (I) un motif répétitif de formule (Ia) suivante :

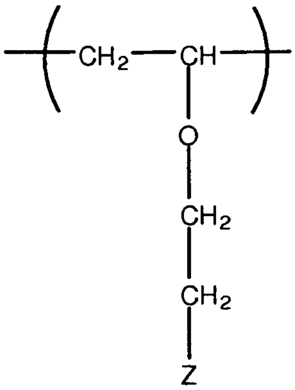

(Ia)

Z étant un groupe de formule $-PO_3R_3R_4$, avec $R_3$ et $R_4$ représentant un groupe éthyle $-CH_2-CH_3$ ou un atome d'hydrogène,
et comme motif conforme à la formule (II) un motif répétitif de formule (IIa) suivante :

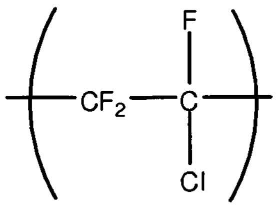

(IIa)

et comme motif conforme à la formule (III) un motif répétitif de formule (IIIa) suivante :

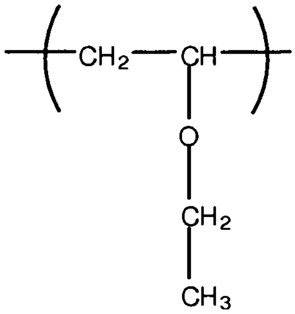

(IIIa)

**7.** Procédé de préparation d'un copolymère comprenant au moins un motif répétitif de formule (I) suivante :

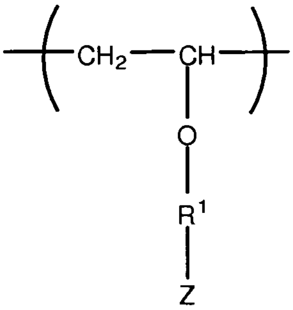

(I)

et au moins un motif répétitif de formule (II) suivante :

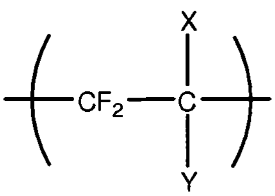

(II)

et éventuellement au moins un motif répétitif de formule (III) suivante :

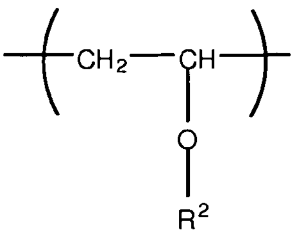

(III)

dans lesquelles :

- $R^1$ est un groupe alkylène ;

- $R^2$ est un groupe alkyle ;
- Z est un groupe - $PO_3R_3R_4$, $R_3$ et $R_4$ représentant, indépendamment l'un de l'autre, un atome d'hydrogène, un groupe alkyle, un cation;
- X et Y représentent, indépendamment l'un de l'autre, un atome d'halogène, un groupe perfluorocarboné,

comprenant les étapes suivantes :

- une étape de réaction d'un copolymère de base comprenant au moins un motif répétitif de formule (IV) suivante :

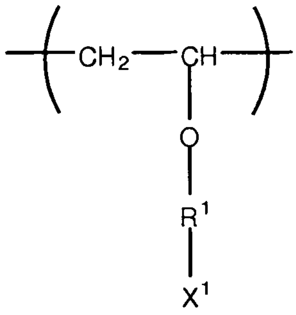

(IV)

et au moins un motif répétitif de formule (II) suivante :

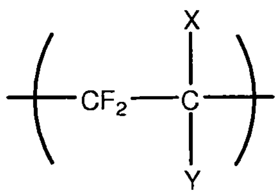

(II)

dans lesquelles $R^1$, X et Y sont tels que définis ci-dessus et $X^1$ est un atome d'iode,
et éventuellement un motif répétitif de formule (III) suivante :

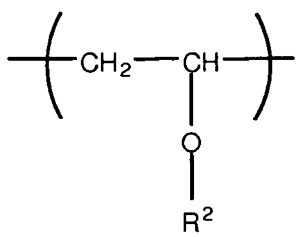

(III)

dans laquelle $R^2$ est tel que défini ci-dessus,
avec un réactif trialkylphosphite, moyennant quoi tout ou partie des groupes $X^1$ sont substitués par un groupe de formule $-PO_3R_5R_6$, $R_5$ et $R_6$ représentant un groupe alkyle issu du réactif trialkylphosphite ;

- éventuellement, une étape d'hydrolyse du groupe $-PO_3R_5R_6$, moyennant quoi ledit groupe est transformé en groupe $-PO_3R_3R_4$, avec $R_3$ et $R_4$ représentant un atome d'hydrogène ou un cation.

**8.** Procédé selon la revendication 7, dans lequel le réactif trialkylphosphite répond à la formule $P(OR_5)(OR_6)$ $(OR_7)$, $R_5$, $R_6$ et $R_7$ représentant un groupe alkyle.

**9.** Procédé selon la revendication 7 ou 8, dans lequel le copolymère de base résulte d'une réaction d'iodation d'un copolymère comprenant au moins un motif répétitif de formule (V) :

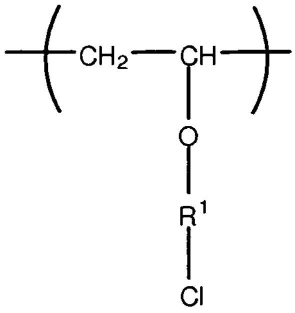

(V)

et au moins un motif répétitif de formule (II) suivante :

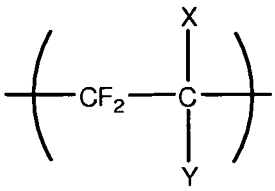

(II)

et éventuellement au moins un motif répétitif de formule (III) :

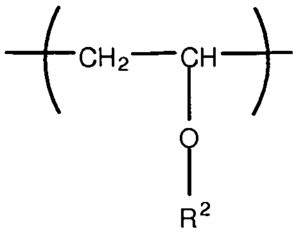

(III)

dans lesquelles $R^1$, $R^2$ X et Y sont tels que définis à la revendication 7 ;
avec un réactif d'iodation.

**10.** Procédé selon la revendication 9, dans lequel le copolymère comprenant au moins un motif répétitif de formule (V), au moins un motif répétitif de formule (II) et éventuellement au moins un répétitif de formule (III) est obtenu par un procédé de copolymérisation comprenant une étape de polymérisation en présence d'un amorceur de radicaux libres d'au moins un monomère de formule (VI) suivante :

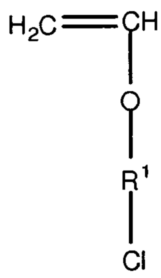

(VI)

d'au moins un monomère de formule (VII) suivante :

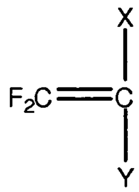

(VII)

et éventuellement d'au moins un monomère de formule (VIII) suivante :

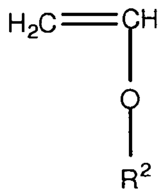

(VIII)

les $R^1$, $R^2$, X et Y étant tels que définis à la revendication 7.

**11.** Membrane comprenant au moins un copolymère tel que défini selon l'une quelconque des revendications 1 à 6.

**12.** Dispositif de pile à combustible comprenant au moins une cellule électrochimique comprenant une membrane telle que définie à la revendication 11, laquelle membrane est disposée entre deux électrodes.

**Patentansprüche**

**1.** Copolymer, umfassend mindestens ein sich wiederholendes Motiv der nachfolgenden Formel (I):

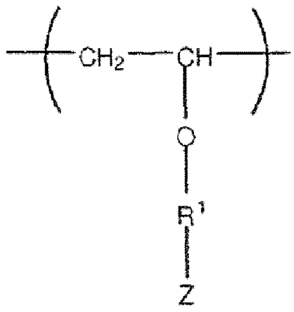

(I)

und mindestens ein sich wiederholendes Motiv der nachfolgenden Formel (II):

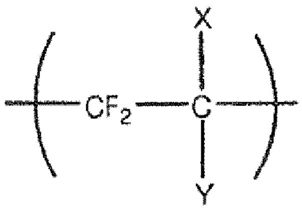

(II)

,

worin:

- $R^1$ eine Alkylen-Gruppe ist;
- Z eine $-PO_3R_3R_4$-Gruppe ist, $R_3$ und $R_4$ unabhängig voneinander ein Wasserstoffatom, eine Alkylengruppe oder ein Kation bedeuten;
- X und Y unabhängig voneinander ein Halogenatom oder eine Perfluorkohlenstoff-Gruppe bedeuten.

**2.** Copolymer nach Anspruch 1, worin $R^1$ eine Gruppe der Formel $-CH_2-CH_2-$ ist.

**3.** Copolymer nach Anspruch 1 oder 2, worin X und Y jeweils ein Halogenatom bedeutet, wobei eine der Gruppen X oder Y mindestens ein Fluoratom ist.

**4.** Copolymer nach Anspruch 1 oder 2, worin X eine Perfluoralkyl-Gruppe bedeutet, während Y ein Halogenatom bedeutet.

**5.** Copolymer nach einem der vorhergehenden Ansprüche, weiterhin umfassend mindestens ein sich wiederholendes Motiv der nachfolgenden Formel (III):

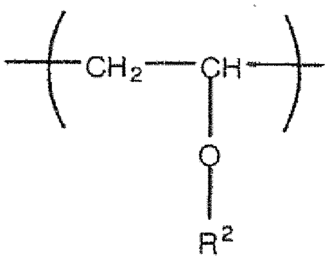

(III)

,

worin $R^2$ eine Alkyl-Gruppe ist.

**6.** Copolymer nach einem der Ansprüche 1 bis 3 und 5, ausgewählt aus den nachfolgenden Copolymeren:

- Copolymere, umfassend als sich wiederholendes Motiv gemäß Formel (I) ein sich wiederholendes Motiv der nachfolgenden Formel (Ia):

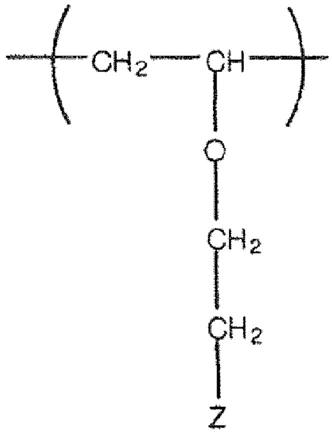

(Ia) ,

worin Z eine Gruppe der Formel $-PO_3R_3R_4$ ist, wobei $R_3$ und $R_4$ eine Ethyl $-CH_2-CH_3$-Gruppe oder ein Wasserstoffatom bedeuten,
und als Motiv gemäß Formel (II) ein sich wiederholendes Motiv der nachfolgenden Formel (IIa):

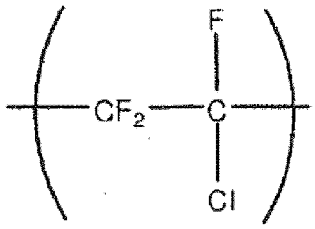

(IIa)

- Copolymere, umfassend als sich wiederholendes Motiv gemäß Formel (I) ein sich wiederholendes Motiv der nachfolgenden Formel (Ia):

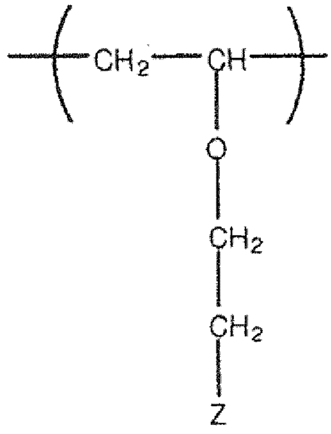

(Ia) ,

worin Z eine Gruppe der Formel $-PO_3R_3R_4$ ist, wobei $R_3$ und $R_4$ eine Ethyl - $CH_2$-$CH_3$-Gruppe oder ein Wasserstoffatom bedeuten,
und als Motiv gemäß Formel (II) ein sich wiederholendes Motiv der nachfolgenden Formel (IIa):

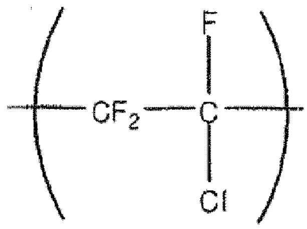

(IIa) ,

und als Motiv gemäß Formel (III) ein sich wiederholendes Motiv der nachfolgenden Formel (IIIa):

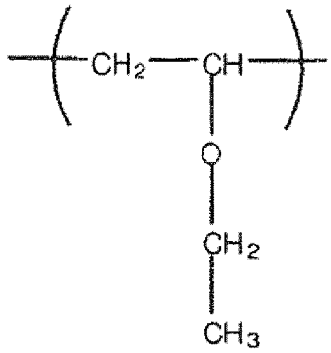

(IIIa)

**7.** Verfahren zur Herstellung eines Copolymers, umfassend mindestens ein sich wiederholendes Motiv der nachfolgenden Formel (I):

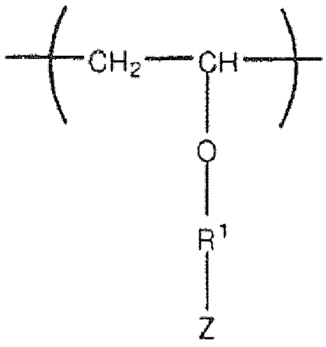

(I)

und mindestens ein sich wiederholendes Motiv der nachfolgenden Formel (II):

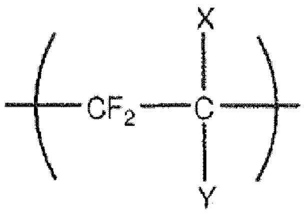

(II)

und gegebenenfalls mindestens ein sich wiederholendes Motiv der nachfolgenden Formel (III):

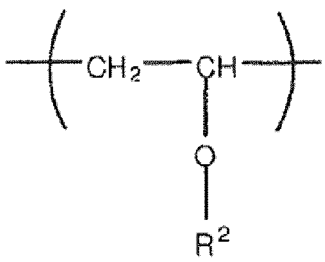

(III) ,

worin:

- $R^1$ eine Alkylen-Gruppe ist;
- $R^2$ eine Alkyl-Gruppe ist;
- Z eine $-PO_3R_3R_4$-Gruppe ist, $R_3$ und $R_4$ unabhängig voneinander ein Wasserstoffatom, eine Alkylengruppe, ein Kation bedeuten;
- X und Y unabhängig voneinander ein Halogenatom, eine Perfluorkohlenstoff-Gruppe bedeuten,

umfassend die folgenden Schritte:

einen Schritt der Reaktion eines Ausgangs-Copolymers, umfassend mindestens ein sich wiederholendes Motiv der nachfolgenden Formel (IV):

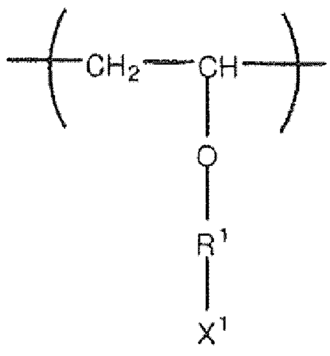

(IV)

und mindestens ein sich wiederholendes Motiv der nachfolgenden Formel (II):

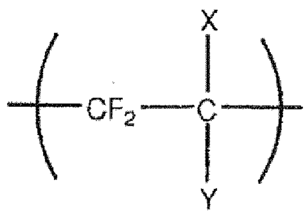

(II) ,

worin $R^1$, X und Y wie oben definiert sind, und $X^1$ ein Iod-Atom ist, und gegebenenfalls ein sich wiederholendes Motiv der nachfolgenden Formel (III):

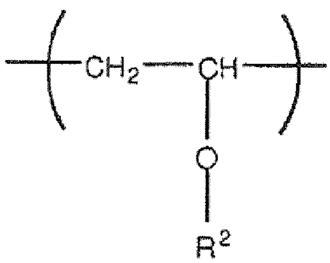

(III) ,

worin $R^2$ wie oben definiert ist,
mit einem Trialkylphosphit-Reaktionsmittel, wodurch alle oder ein Teil der $X^1$-Gruppen substituiert wird/werden durch eine Gruppe der Formel $-PO_3R_5R_6$, $R_5$ und $R_6$ eine Alkylgruppe bedeuten, die aus dem Reaktionsmittel Trialkylphosphit hervorgeht;
gegebenenfalls einen Hydrolyseschritt der $-PO_3R_5R_6$-Gruppe, wodurch die Gruppe in eine $-PO_3R_3R_4$-Gruppe übergeführt wird, worin $R_3$ und $R_4$ ein Wasserstoffatom oder ein Kation bedeuten.

**8.** Verfahren nach Anspruch 7, worin das Reaktionsmittel Trialkylposphit der Formel $P(OR_5)(OR_6)(OR_7)$ entspricht, worin $R_5$, $R_6$ und $R_7$ eine Alkyl-Gruppe bedeuten.

**9.** Verfahren nach Anspruch 7 oder 8, worin das Ausgangs-Copolymer aus einer Iodierungsreaktion eines Copolymers resultiert, umfassend mindestens ein sich wiederholendes Motiv der Formel (V):

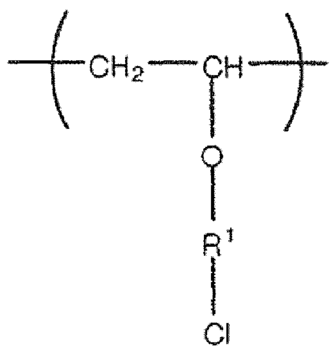

(V)

und mindestens ein sich wiederholendes Motiv der nachfolgenden Formel (II):

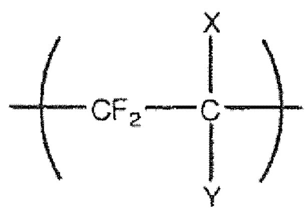

(II)

und gegebenenfalls mindestens ein sich wiederholendes Motiv der nachfolgenden Formel (III):

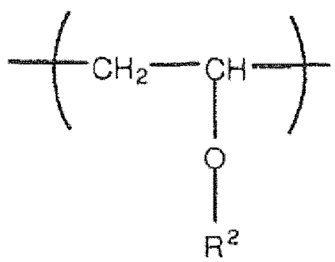

(III) ,

in welchen $R^1$, $R^2$, X und Y wie in Anspruch 7 definiert sind; mit einem Iodierungs-Reaktionsmittel.

**10.** Verfahren nach Anspruch 9, worin das Copolymer, umfassend mindestens ein sich wiederholendes Motiv der Formel (V), mindestens ein sich wiederholendes Motiv der Formel (II) und gegebenenfalls ein sich wiederholendes Motiv der Formel (III), erhalten wird durch einen Copolymerisationsschritt, umfassend einen Polymerisationsschritt in Gegenwart eines freien Radikalstarters mindestens eines Monomers der nachfolgenden Formel (VI):

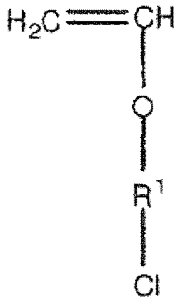

(VI)

mindestens eines Monomers der nachfolgenden Formel (VII):

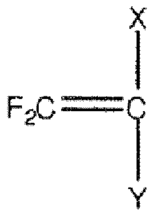

(VII)

und gegebenenfalls mindestens eines Monomers der nachfolgenden Formel (VIII):

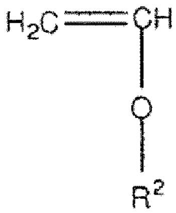

(VIII) ,

wobei $R^1$, $R^2$, X und Y wie in Anspruch 7 definiert sind.

**11.** Membran, umfassend mindestens ein Copolymer wie in einem der Ansprüche 1 bis 6 definiert.

**12.** Brennstoffzellenvorrichtung, umfassend mindestens eine elektrochemische Zelle, die eine Membran wie in Anspruch 11 definiert umfasst, wobei die Membran zwischen zwei Elektroden angeordnet ist.

**Claims**

**1.** A copolymer comprising at least one recurrent unit of the following formula (I):

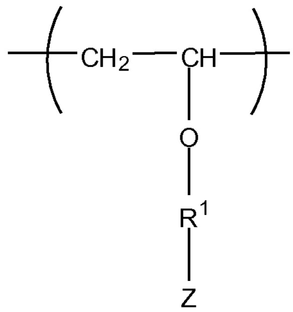

(I)

and at least one recurrent unit of the following formula (II):

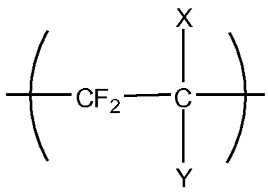

(II)

wherein:

- $R^1$ is an alkylene group;
- Z is a $-PO_3R_3R_4$, $R_3$ and $R_4$ representing independently of each other, a hydrogen atom, an alkyl group or a cation;
- X and Y represent independently of each other a halogen atom or a perfluorocarbon group.

**2.** The copolymer according to claim 1, wherein $R^1$ is a group of formula $-CH_2-CH_2-$.

**3.** The copolymer according to claim 1 or 2, wherein X and Y each represent a halogen atom, at least one of the groups X or Y being a fluorine atom.

**4.** The copolymer according to claim 1 or 2, wherein X represents a perfluoroalkyl group, while Y represents a halogen atom.

**5.** The copolymer according to any of the preceding claims, further comprising at least one recurrent unit of the following formula (III):

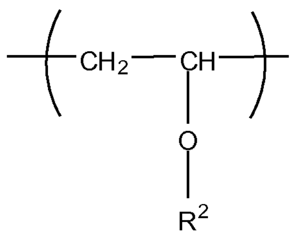

(III)

wherein $R^2$ is an alkyl group.

**6.** The copolymer according to any of claims 1 to 3 and 5, selected from the following copolymers:

- copolymers comprising as a recurrent unit according to formula (I), a recurrent unit of the following formula (Ia) :

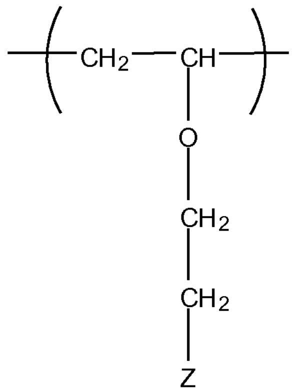

(Ia)

Z being a group of formula $-PO_3R_3R_4$, with $R_3$ and $R_4$ representing an ethyl group $-CH_2-CH_3$ or a hydrogen atom, and as a unit according to formula (II), a recurrent unit of the following formula (IIa):

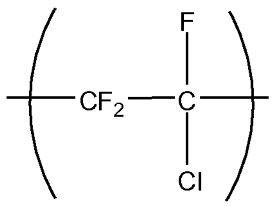

(IIa)

- copolymers comprising as a recurrent unit according to formula (I), a recurrent unit of the following formula (Ia) :

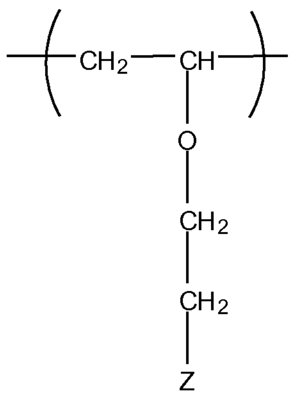

(Ia)

Z being a group of formula $-PO_3R_3R_4$, with $R_3$ and $R_4$ representing an ethyl group $-CH_2-CH_3$ or a hydrogen atom, and as a unit according to formula (II), a recurrent unit of the following formula (IIa):

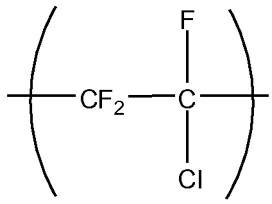

(IIa)

and as a unit according to formula (III), a recurrent unit of the following formula (IIIa):

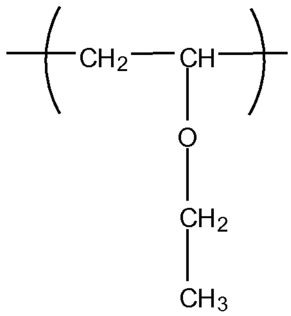

(IIIa)

**7.** A method for preparing a copolymer comprising at least one recurrent unit of the following formula (I):

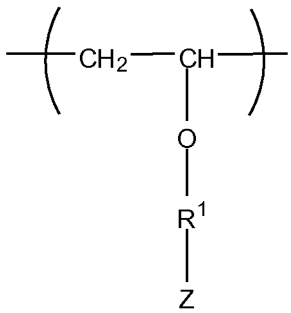

(I)

and at least one recurrent unit of the following formula (II):

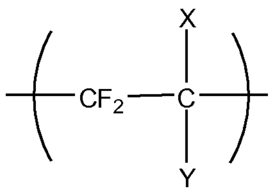

(II)

and optionally at least one recurrent unit of the following formula (III):

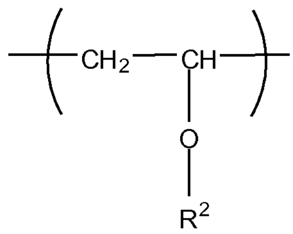

(III)

wherein:

- $R^1$ is an alkylene group;
- $R^2$ is an alkyl group;
- Z is a $-PO_3R_3R_4$, $R_3$ and $R_4$ representing, independently of each other, a hydrogen atom, an alkyl group, a cation;
- X and Y represent, independently of each other, a halogen atom, a perfluorocarbon group, comprising the following steps:
- a step for reacting a base copolymer comprising at least one recurrent unit of the following formula (IV):

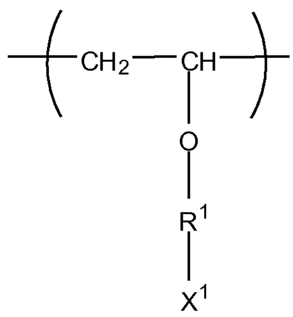

(IV)

and at least one recurrent unit of the following formula (II):

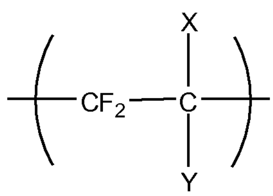

(II)

wherein $R^1$, X and Y are as defined above and $X^1$ is a iodine atom,
and optionally a recurrent unit of the following formula (III):

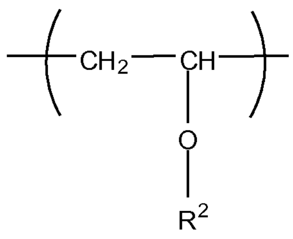

(III)

wherein $R^2$ is as defined above,
with a trialkylphosphite reagent, whereby all or part of the $X^1$ groups are substituted with a group of formula $-PO_3R_5R_6$, $R_5$ and $R_6$ representing an alkyl group derived from the trialkylphosphite reagent;

- optionally, a step for hydrolysis of the $-PO_3R_5R_6$ group, whereby said group is transformed into a $-PO_3R_3R_4$ group, with $R_3$ and $R_4$ representing a hydrogen atom or a cation.

**8.** The method according to claim 7, wherein the trialkylphosphite reagent fits the formula $P(OR_5)$ $(OR_6)(OR_7)$, $R_5$, $R_6$ and $R_7$ representing an alkyl group.

**9.** The method according to claim 7 or 8, wherein the base copolymer results from a reaction for iodination of a copolymer comprising at least one recurrent unit of formula (V):

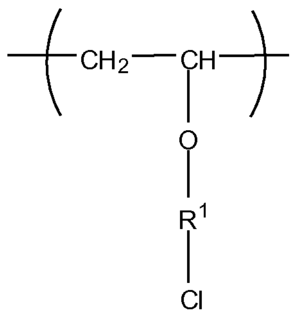

(V)

and at least one recurrent unit of the following formula (II):

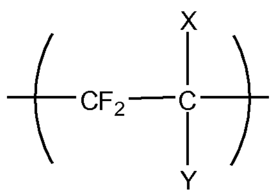

(II)

and optionally at least one recurrent unit of formula (III) :

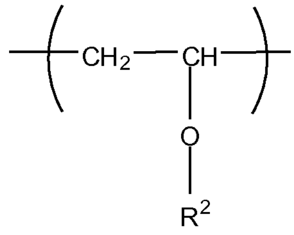

(III)

wherein $R^1$, $R^2$ X and Y are as defined in claim 7; with an iodination reagent.

**10.** The method according to claim 9, wherein the copolymer comprising at least one recurrent unit of formula (V), at least one recurrent unit of formula (II) and optionally at least one recurrent unit of formula (III) is obtained with a copolymerization method comprising a step for polymerization in the presence of an initiator of free radicals, of at least one monomer of the following formula (VI):

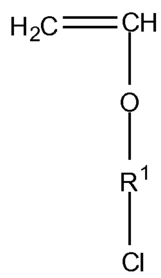

(VI)

of at least one monomer of the following formula (VII):

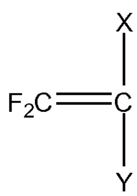

(VII)

and optionally of at least one monomer of the following formula (VIII):

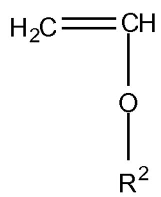

(VIII)

$R^1$, $R^2$, X and Y being as defined in claim 7.

**11.** A membrane comprising at least one copolymer as defined according to any of claims 1 to 6.

**12.** A fuel cell device comprising at least one electrochemical cell comprising a membrane as defined in claim 11, which membrane is positioned between two electrodes.

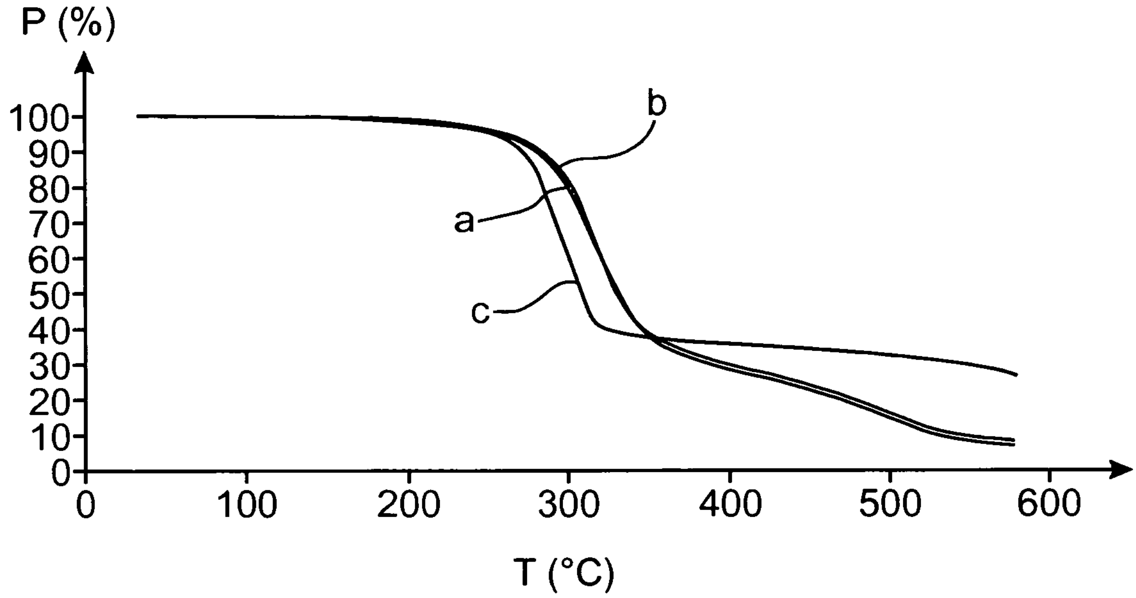


Figure unique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- *J. Membr. Sci.,* 2001, vol. 185, 29-39
- *J.Polym.Sci., Part A :Poly.Chem.,* 2007, vol. 45, 269-283